Europäisches Patentamt

(19) European Patent Office

Office européen des brevets

(11) Numéro de publication : **0 245 177 B1**

## (12) FASCICULE DE BREVET EUROPEEN

(45) Date de publication du fascicule du brevet :
**08.05.91 Bulletin 91/19**

(51) Int. Cl.⁵ : **B23Q 1/16**

(21) Numéro de dépôt : **87401032.5**

(22) Date de dépôt : **06.05.87**

(54) **Dispositif de support d'une pièce d'ouvrage permettant le travail sur la cinquième face.**

(30) Priorité : **07.05.86 FR 8606637**

(43) Date de publication de la demande :
**11.11.87 Bulletin 87/46**

(45) Mention de la délivrance du brevet :
**08.05.91 Bulletin 91/19**

(84) Etats contractants désignés :
**AT BE CH DE ES GB GR IT LI LU NL SE**

(56) Documents cités :
**AT-B- 302 768**
**FR-A- 1 115 101**
**FR-A- 1 539 898**
**US-A- 1 409 343**

(56) Documents cités :
**US-A- 2 329 135**
**US-A- 2 452 089**
**US-A- 2 736 244**
**US-A- 2 871 768**

(73) Titulaire : **GSP CONSTRUCTEUR**
**27 boulevard Toutain**
**F-28207 CHATEAUDUN CEDEX (FR)**

(72) Inventeur : **Chalandon, Daniel Louis Etienne**
**31 rue du Fer à Cheval**
**Saint Denis les Ponts§F-28200 Chateaudun**
**(FR)**

(74) Mandataire : **Madeuf, Claude Alexandre Jean**
**et al**
**CABINET MADEUF 3, avenue Bugeaud**
**F-75116 Paris (FR)**

## Description

Cette invention concerne un dispositif de support d'une pièce d'ouvrage permettant le travail sur la cinquième face comme il est décrit dans le préambule de la revendication 1.

Lorsque l'on usine des pièces, de forme sensiblement parallélépipédique, il est assez aisé, sur des machines-outils automatiques à commande numérique, de régler l'outil de travail pour effectuer certaines opérations sur les quatre faces latérales car les machines-outils permettent la rotation du chariot de base soit sur 180° dans deux sens soit même sur 360° par rapport à un axe vertical Y-Y.

De plus, ces machines comportent, pour leur chariot porte-pièces, des moyens de déplacements horizontaux suivant l'axe X-X.

Finalement, l'axe des brochures est également animé d'un mouvement d'avance et de recul suivant l'axe Z-Z, ce qui fait que l'on peut effectuer sur les quatre faces latérales beaucoup d'opérations d'usinage, telles que fraisage, perçage, alésage, rectification, etc, sans avoir à démonter la pièce d'ouvrage. Mais il est extrêmement difficile d'effectuer sur la face supérieure, dite cinquième face, un travail quelconque sans être amené à démonter la pièce d'ouvrage pour la poser sur l'une des faces latérales. Ce déplacement de la pièce d'ouvrage a pour effet, d'une part, un temps mort coûteux, la machine-outil étant alors immobilisée et, d'autre part, un risque de détérioration de la face latérale servant de face de repos. De plus, les références changent et la précision finale est moins bonne.

Ceci est d'autant plus marqué que, bien souvent, on a cherché à installer sur les machines-outils des dispositifs appelés palettes qui supportent chacune une pièce d'ouvrage à usiner et que les machines-outils peuvent palettiser au moins deux palettes de façon à ce que ces palettes permettent le travail sur deux pièces voisines puisque, pendant la fixation d'une des palettes, l'autre palette maintient la pièce en cours d'usinage. Il s'agit donc d'un système en "temps masqué".

En général, les machines-outils présentent un plateau qui est équin d'un dispositif de positionnement et de blocage de la palette. Ce plateau mobile en rotation autour d'un axe vertical permet ainsi une rotation des deux faces soit de 180°, soit de 360°.

Ce plateau est lui-même supporté par un chariot qui est animé d'un mouvement rectiligne suivant l'axe des X. De plus, l'arbre moteur ou broche portant l'outil de travail est supporté par une poupée qui est animée d'un mouvement vertical suivant l'axe Y-Y.

Finalement, une partie de la machine-outil, qui porte la poupée et donc la broche de l'outil de travail, est animée d'un mouvement longitudinal suivant l'axe des Z.

Comme on peut s'en rendre compte par la description qui précède, il est possible d'obtenir, pour la pièce à usiner, un déplacement vertical suivant l'axe des Y, un déplacement longitudinal suivant l'axe des X, un mouvement de rotation sur elle-même de 180° ou de 360° et finalement l'axe de la broche suit un mouvement longitudinal d'avant en arrière suivant l'axe des Z perpendiculaire à l'axe des X et des Y soit dans le plan de l'axe des X, soit dans le plan de l'axe des Y.

Les directions de déplacement de différentes parties mobiles d'un centre d'usinage telles que celles décrites s'appellent des axes et ceux-ci sont souvent orthogonaux et numérisés, c'est-à-dire que la valeur du déplacement est contrôlée par un dispositif de contrôle numérique dénommé CNC.

De plus, lorsque la commande numérique est un CNC, le déplacement simultané des axes sus-mentionnés peut suivre une loi mathématique et faire décrire par exemple un cercle à un point donné. Une telle propriété sera utilisée pour le dispositif qui sera décrit dans ce qui suit.

Après ces explications, il y a lieu de remarquer que la présente invention se situe sur une machine-outil du type sus-mentionné et que ce dispositif vient se placer sur le plateau de la machine. Il s'agit donc d'une palette spéciale.

On connaît cependant par US-A-2 736 244, qui décrit l'état de la technique la plus proche, un dispositif à commande manuelle pour le support d'une pièce d'ouvrage qui se compose d'une base, dont la face inférieure présente des saignées destinées à coopérer avec les éléments mâles prévus sur le chariot de la machine-outil considérée.

Conformément à l'invention, la machine outil est équipée d'un CNC et la base du dispositif de support porte des bâtis latéraux verticaux contenant chacun un palier muni de roulements à billes ou à aiguilles qui sont protégés par des joints et des capuchons, ces paliers supportant un arbre muni de deux zones de cannelures pour permettre la fixation sur un arbre d'un élément cylindrique portant des bras supportant la table sur laquelle vient se placer la pièce d'ouvrage, l'arbre étant prolongé par un disque portant sur sa périphérie, un évidement circulaire coopérant avec un doigt pour limiter le déplacement de la table sur 90°, des perçages étant prévus dans le disque dans des positions diamétralement opposées aux extrémités de l'évidement pour assurer le verrouillage de la table, soit horizontalement, soit verticalement à l'aide d'une tige normalement repoussée par un ressort, cette tige pouvant être déplacée à l'aide d'un vérin pour permettre la rotation de la table, ce vérin recevant le fluide moteur par l'intermédiaire de canalisations disposées convenablement dans la base et muni de soupapes permettant l'ouverture et la fermeture des circuits de fluide moteur, la commande du dispositif de support et le positionnement de la table (28) se fait à l'aide du CNC dont est équipée la machine-outil sur laquelle est fixé le dispositif, tandis que cette table présente un trou borgne (38) dans lequel pénètre l'outil pour l'amener dans la position verticale.

Suivant une autre caractéristique de l'invention, le dessus de la table comporte des trous borgnes taraudés permettant le guidage de la pièce d'ouvrage.

Diverses autres caractéristiques de l'invention ressortent d'ailleurs de la description détaillée qui suit.

Une forme de réalisation de l'objet de l'invention est représentée, à titre d'exemple non limitatif, au dessin annexé.

La fig. 1 est une élévation latérale du dispositif de support d'une pièce d'ouvrage permettant le travail aisé sur la cinquième face.

La fig. 1a montre, en perspective, l'extrémité d'une pièce du dispositif de la fig. 1.

La fig. 2 est une vue de face correspondant à la fig. 1 sensiblement suivant la flèche F$_2$ de la fig. 1.

La Fig. 3 est un plan, partie en coupe, du dispositif de support.

Les fig. 4a, 4b, 4c, et 4d sont des schémas de fonctionnement du dispositif conforme à l'invention.

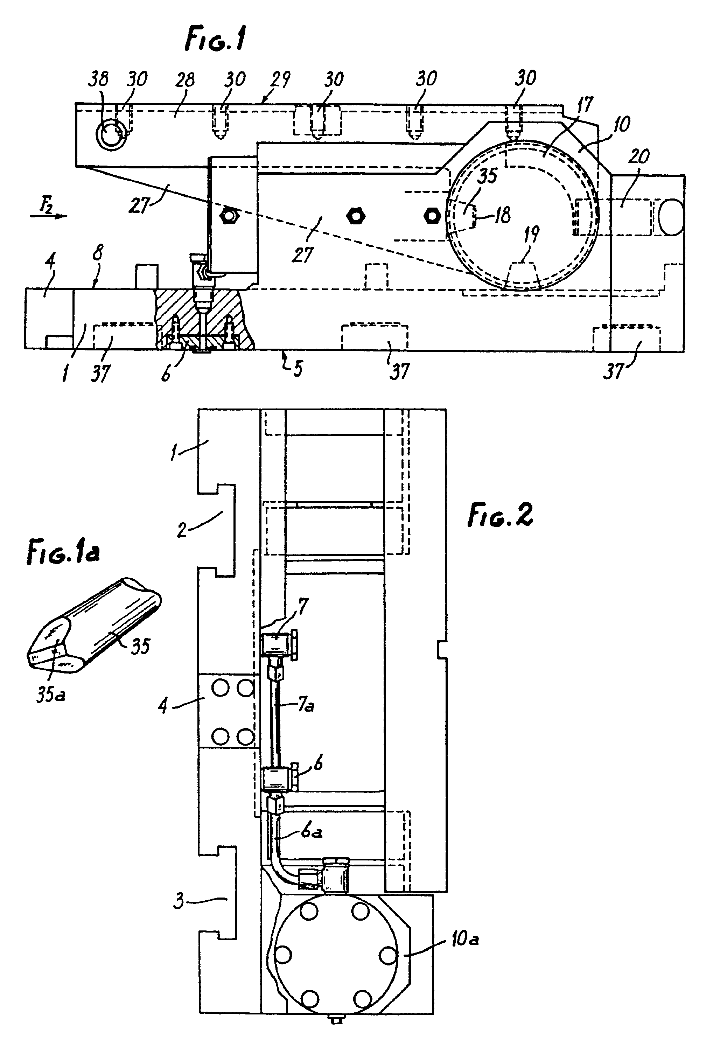

A la fig. 1, on a représenté le dispositif de support qui se compose d'une base 1 présentant des saignées inférieures 2, 3 en T ou en queue d'aronde et qui sont destinées à permettre la fixation de la base 1 sur le chariot du plateau de la machine-outil.

La phase avant de la base 1 porte une pièce d'attelage 4 qui permet à l'aide d'un outil de préhension de déplacer aisément le dispositif le long des rainures du chariot du plateau de la machine-outil.

Le plateau de la machine, qui n'est pas représenté dans le cas présent, comporte des arrivées de fluide sous pression qui débouchent sous la face inférieure 5 de la base 1 devant des soupapes 6, 7 dont le rôle sera expliqué plus loin.

Le dessus ou face supérieure 8 de la base 1 est prolongé latéralement par des bâtis 9, 10 qui contiennent chacun des paliers 11, 12 munis de roulements à billes ou à aiguilles, dans le cas présent des roulements à billes 12a qui sont protégés du côté interne par des joints spéciaux 13 et vers l'extérieur par des capuchons 14.

Un arbre 15 repose dans les paliers 11, 12, cet arbre étant cannelé en 15a, 15b. De plus, l'arbre est prolongé sur le côté du bâti 10 par un disque 16 de plus grand diamètre comportant à sa périphérie, d'une part, un logement ou évidement circulaire 17 s'étendant sur 90° et, d'autre part, deux évidements en coin 18, 19 disposés à 90° l'un de l'autre et à 180° par rapport aux extrémités de l'évidement ou logement 17.

Le logement 17 coopère avec un doigt cylindrique 20.

Les zones cannelées 15a, 15b supportent des chemises 21, 22 cannelées intérieurement et qui sont reliées par des vis 24 et des goupilles 24a à un élément cylindrique 25 qui porte des bras 26, 27 s'étendant au-dessus de la face supérieure 8 de la base 1.

Le montage sus-décrit assure donc la possibilité à l'élément cylindrique 25 solidaire de l'arbre 15 de tourner aisément dans les paliers 11, 12.

Comme les bras 26, 27 sont solidaires d'une table 28, celle-ci peut donc tourner aisément avec l'élément cylindrique 25 de la position horizontale représentée à la fig. 1 à la position verticale puisque le doigt cylindrique 20 rigidement fixé à la base 1 limite le déplacement de l'arbre 25 sur 90°, c'est-à-dire la longueur du logement 17.

La face supérieure 29 de la table 28 comporte, de place en place, des lignes de trous borgnes taraudés 30 permettant à l'aide de broches filetées la fixation de pièces d'ouvrage de dimensions différentes.

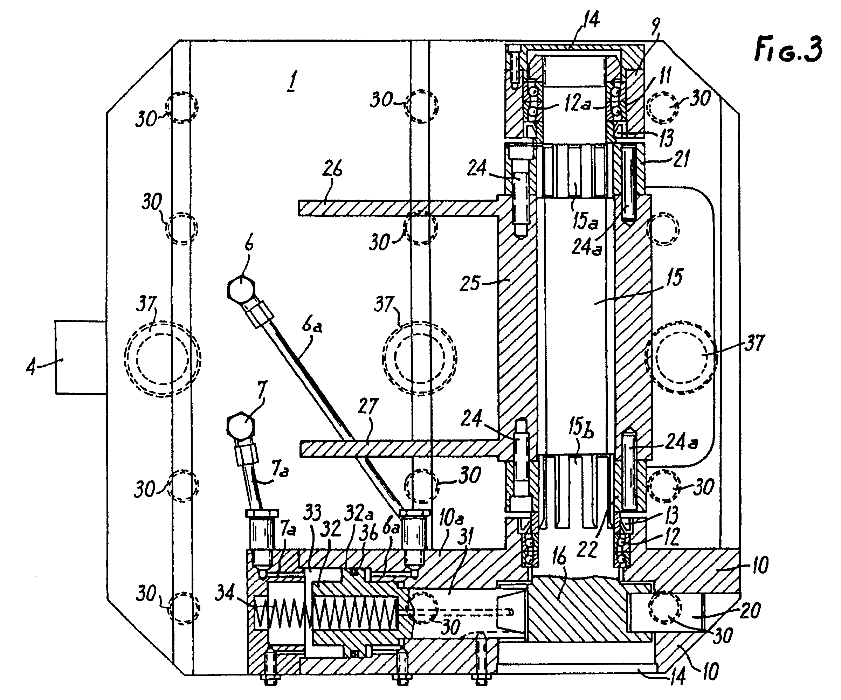

Comme cela est visible aux fig. 1 et 3, le bâti 10 est prolongé sur sa face avant par un élément sensiblement cylindrique 10a évidé intérieurement et qui contient une tige 31 suivie d'une tête 32 formant piston, cette tête 32 qui est logée dans la chambre arrière 33 est normalement repoussée par un ressort 34.

Ainsi, et comme cela est visible à la fig. 1, le doigt 35 solidaire de la tige 31 pénètre tantôt dans l'évidement en coin 18 tantôt dans l'évidement en coin 19 suivant que la table 28 est placée horizontalement ou verticalement. L'extrémité 35a du doigt 35 est biseautée comme représenté à la fig. 1a.

La tête 32 est munie en son centre d'une couronne circulaire 32a recevant un joint d'étanchéité 35 pour permettre de diviser la chambre 33 en deux parties, ce qui permet de faire déplacer la tige 31 tantôt dans un sens tantôt dans l'autre suivant qu'un fluide comprimé arrive depuis l'une des soupapes 6, 7 à travers les conduites 6a, 7a (voir fig. 3).

Des évidements coniques 37 sont prévus sous la face inférieure 5 de la base 1 pour centrer cette base par des moyens divers sur les chariots de la machine-outil considérée.

Finalement, il est prévu à l'avant de la table 28 un trou borgne 38 dont le rôle sera expliqué plus loin.

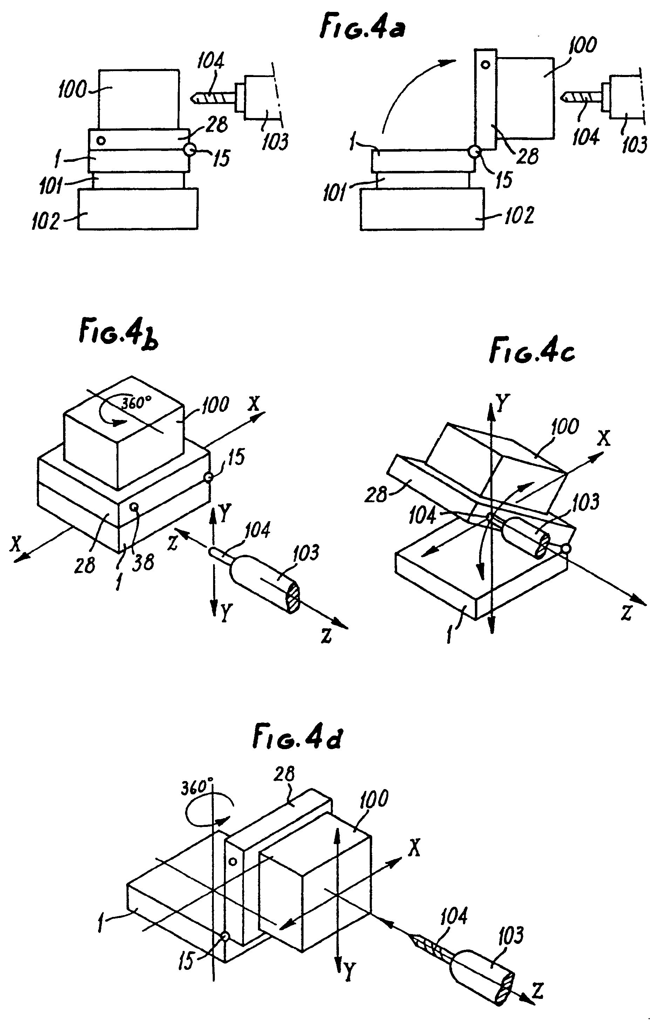

Lorsque l'on examine les schémas de la fig. 4a à 4d, on constate que la pièce d'ouvrage 100, qui doit être usinée sur cinq faces, quatre faces latérales et la cinquième face supérieure, est montée sur le dessus de la table 28 qui s'articule autour de l'arbre 15 mais qui dans le cas présent repose sur la base 1, elle-même reposant sur le plateau 101 du chariot 102 de la machine-outil considérée.

Comme cela a été expliqué ci-dessus, le chariot 102 permet une rotation sur 360° et également un déplacement suivant l'axe X-X.

La broche 103 peut être déplacée suivant l'axe Y-Y vertical dont orthogonalement à l'axe X-X et de plus transversalement suivant l'axe Z-Z de façon à rapprocher l'outil 104 de la pièce à usiner 100.

Ce mouvement permet d'une manière aisée le travail sur les quatre faces latérales.

Lorsque l'on désire travailler sur la cinquième face, c'est-à-dire la face supérieure de la pièce, on est amené à mettre celle-ci en position verticale par un basculement. La broche 103 est alors déplacée de façon que l'outil 104 pénètre dans le trou borgne 38 de la table 28 qui, en tournant autour de l'arbre 15, l'amène dans la position verticale lorsqu'une rotation de 90° a été effectuée. Après retrait de la broche 103 et de l'outil 105, la cinquième face est disposée face à l'outil de travail 104.

Dans certains cas, il est également possible que la table occupe une position comprise entre la position horizontale et la position verticale, par exemple que cette table ait une inclinaison de 30°. Ces positions intermédiaires sont prédéterminées du fait des valeurs entrées dans le calculateur de la CNC. Dans ce cas, il est prévu un dispositif de blocage particulier de la table 28 soit à l'aide d'une pince ou de bague expansible de façon à maintenir la position déterminée. Bien entendu, comme dans le cas précédent c'est la bague 103 qui détermine la position recherchée de la table 28 en utilisant les possibilités de calcul de la CNC (voir fig. 4C).

Bien entendu, le mouvement de la table 28 s'effectue après son déverrouillage à l'aide de la tige 31 de façon que cette tige terminée par le doigt 35 passe de l'évidement 18 à l'évidement 19 lorsque le basculement est de 90°.

La pièce d'ouvrage est montée sur la table 28 par des moyens divers.

La source d'énergie pneumatique, hydraulique ou autre est donnée par la machine-outil elle-même.

Comme il a été indiqué au début de la présente description, la machine-outil employée étant munie d'un CNC, tous les mouvements sont coordonnés par les ordinateurs dont les mémoires ont reçu les indications nécessaires.


## Revendications

1. Dispositif de support d'une pièce d'ouvrage permettant le travail sur la cinquième face qui se compose d'une base (1) dont la face inférieure présente des saignées (2, 3) destinées à coopérer avec des éléments mâles prévus sur le chariot de la machine-outil considérée, la machine-outil étant équipée d'un CNC, caractérisé en ce que la base (1) porte des bâtis latéraux verticaux (9, 10) contenant chacun un palier (11 ou 12) muni de roulement à billes ou à aiguilles qui sont protégés par des joints (13) et des capuchons (14), ces paliers (11, 12) supportant un arbre (15) muni de deux zones de cannelures (15a, 15b) pour permettre la fixation sur un arbre (15) d'un élément cylindrique (25) portant des bras (26, 27) supportant la table (28) sur laquelle vient se placer la pièce d'ouvrage, l'arbre (15) étant prolongé par un disque (16) portant sur sa périphérie un évidement circulaire (17) coopérant avec un doigt (20) pour limiter le déplacement de la table (28) sur 90°, des perçages (18, 19) étant prévus dans le disque (16) dans les positions diamétralement opposées aux extrémités de l'évidement (17) pour assurer le verrouillage de la table (28), soit horizontalement, soit verticalement à l'aide d'une tige (31) normalement repoussées par un ressort (34), cette tige (31) pouvant être déplacée à l'aide d'un vérin (32, 32a, 33) pour permettre la rotation de la table (28), ce vérin recevant le fluide moteur par l'intermédiaire de canalisations disposées convenablement dans la base (1) et muni de soupapes permettant l'ouverture et la fermeture des circuits de fluide moteur, la commande du dispositif de support et le positionnement de la table (28) se fait à l'aide du CNC dont est équipée la machine-outil sur laquelle est fixé le dispositif, tandis que cette table présente un trou borgne (38) dans lequel pénètre l'outil pour l'amener dans la position verticale.

2. Dispositif suivant la revendication 1, caractérisé en ce que le dessus de la table (28) comporte des trous borgnes taraudés (30) permettant le guidage de la pièce d'ouvrage.

3. Dispositif suivant la revendication 1, caractérisé en ce que le déplacement de la table (28) en inclinaison limité à 90° peut se faire selon plusieurs angles par exemple 30°, 45° et 60°.


## Ansprüche

1. Vorrichtung zum Stützen eines Werkstückes zur Ermöglichung der Bearbeitung auf seiner fünften Fläche, bestehend aus einer Grundplatte (1), deren Unterseite Nuten (2, 3) aufweist, welche zum Zusammenwirken mit am Untergestell der mit CNC ausgestatteten Werkzeugmaschine vorgesehenen Einsteckelementen bestimmt sind, dadurch gekennzeichnet, daß die Grundplatte (1) vertikale seitliche Aufbauten (9, 10) besitzt, von welchen jede ein Lager (11 oder 12) aufweist, die mit Kugel- oder Nadellagern versehen sind, welche durch Dichtungen (13) und Schutzkappen (14) geschützt sind, wobei diese Lager (11, 12) eine Welle (15) unterstützen, welche mit zwei genuteten Zonen (15a, 15b) versehen ist, um die Befestigung eines zylindrischen Elementes (25) auf dieser Welle (15) zu gestatten, welches Arme (26, 27) trägt, die den Arbeitstisch (28) unterstützen, auf welchem das Werkstück zu liegen kommt, wobei die Welle (15) durch eine Scheibe (16) verlängert ist, die entlang ihres Umfanges eine kreisförmige Ausnehmung (17) aufweist, die mit einem Zapfen (20) zusammenwirkt um die Verschwenkung des Arbeitstisches (28) auf 90° zu beschränken und in der Scheibe (16) Bohrungen (18, 19) an den Enden der Ausnehmung (17) an diametral entgegengesetzten Positionen vorgesehen sind, um die Verriegelung des Arbeitstisches (28) sowohl horizontal als auch vertikal mit Hilfe eines normalerweise durch eine Feder (34) zurückgedrückten Stiftes (31) sicherzustellen, wobei dieser Stift (31) mit Hilfe eines Stellzylinders (32, 32a, 33) verschoben werden kann, um die Verschwenkung des Arbeitstisches (28) zu gestatten, wobei dieser Stellzylinder das Arbeitsfluid über vorzugsweise in der Grundplatte (1) angeordnete und mit Ventilen zur Öffnung oder zum Schließen des Kreislaufes des Arbeitsfluids ausgestatteten Kanälen empfängt, und die Steuerung der Vorrichtung zum Stützen und das Positionieren des Arbeitstisches (28) mit Hilfe der CNC ausgeführt wird, mit welcher die Werkzeugmaschine ausgestattet ist, auf der die besagte Vorrichtung fixiert ist, und der Arbeitstisch eine blinde Bohrung (38) aufweist, in welche das Werkzeug eindringt, um den Tisch in die vertikale Position zu bringen.

2. Vorrichtung gemäß Anspruch 1, dadurch gekennzeichnet, daß die Oberseite des Arbeitstisches (28) mit Gewinde versehene blinde Bohrungen (30) aufweist, welche die Führung des Werkstückes gestatten.

3. Vorrichtung gemäß Anspruch 1, dadurch gekennzeichnet, daß die auf 90° beschränkte Verschwenkung des Arbeitstisches (28) in mehreren Winkelschritten, beispielsweise 30°, 45° und 60°, erfolgen kann.

## Claims

1. Supporting device of a work piece enabling the working on the fifth surface, comprising a base (1) the lower surface of which has cuts (2, 3) provided to cooperate with male elements provided on the carriage of the considered machine tool, the machine tool being fitted with a CNC, characterized in that the base (1) carries vertical lateral frames (9, 10), each containing a bearing member (11 or 12) provided with ball or pin rollers which are protected by gaskets (13) and caps (14), these bearing members (11, 12) supporting a shaft (15) provided with two grooved areas (15a, 15b) for enabling the fixation on a shaft (15) of a cylindrical element (25) carrying arms (26, 27) supporting the table (28) on which is positioned the work part, the shaft (15) being extended by a disk (16) carrying on its periphery a circular recess (17) cooperating with a finger (20) for limiting the displacement of the table (28) by 90°, piercings (18, 19) being provided in the disk (16) in positions diametrically opposed to ends of the recess (17) for ensuring the locking of the table (28) either horizontally or vertically by means of a rod (31) which is normally pushed back by a spring (34), this rod (31) being movable by means of a cylinder (32, 32a, 33) for enabling the rotation of the table (28), this cylinder receiving the motor fluid through ducts suitably placed in the base (1) and provided with valves enabling the opening and closing of the circuits for the motor fluid, the control of the device for supporting and positioning the table (28) is made by means of the CNC comprised by the machine tool on which is fixed the device, while this table has a blind hole (38) in which penetrates the tool for bringing it in the upright position.

2. Device according to claim 1, characterized in that the top portion of the table (28) comprises screwed blind holes (30) for guiding the work piece.

3. Device according to claim 1, characterized in that the displacement of the table (28) in inclination limited to 90° can be made according to a plurality of angles, for example 30°, 45° and 60°.

Fig. 1

Fig. 1a

Fig. 2

Fig.3

## Fɪɢ.4a

## Fɪɢ.4b

## Fɪɢ.4c

## Fɪɢ.4d